(19) Europäisches Patentamt
European Patent Office
Office européen des brevets

(11) **EP 3 155 451 B1**

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(21) Anmeldenummer: **15750640.3**

(22) Anmeldetag: **18.08.2015**

(51) Int Cl.:
*G01S 19/22* ^(2010.01)

(86) Internationale Anmeldenummer:
**PCT/EP2015/001694**

(87) Internationale Veröffentlichungsnummer:
**WO 2016/034267 (10.03.2016 Gazette 2016/10)**

(54) **VERFAHREN UND VORRICHTUNG ZUR BEWERTUNG EINES SATELLITENSIGNALS IN EINEM GLOBALEN NAVIGATIONSSATELLITENSYSTEM IM HINBLICK AUF EINEN MEHRWEGEFEHLER**

METHOD AND DEVICE FOR THE EVALUATION OF A SATELLITE SIGNAL IN A GLOBAL NAVIGATION SATELLITE SYSTEM WITH REGARD TO A MULTIPATH ERROR

PROCÉDÉ ET DISPOSITIF POUR L'ÉVALUATION D'UN SIGNAL SATELLITE DANS UN SYSTÈME MONDIAL DE NAVIGATION PAR SATELLITES, AU SUJET D'UNE ERREUR DE MULTITRAJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2014 DE 102014013209**

(43) Veröffentlichungstag der Anmeldung:
**19.04.2017 Patentblatt 2017/16**

(73) Patentinhaber: **Audi AG**
**85045 Ingolstadt (DE)**

(72) Erfinder:
• **TOLLKÜHN, Andreas**
  **85049 Ingolstadt (DE)**
• **MICKLER, Florian**
  **85049 Ingolstadt (DE)**

• **BEITLER, Anton**
  **CH-8032 Zürich (CH)**

(74) Vertreter: **Bauer, Dominik Michael**
**Audi AG**
**Patentabteilung**
**85045 Ingolstadt (DE)**

(56) Entgegenhaltungen:
**EP-A2- 2 078 965     US-B1- 6 329 945**

• **JEE G-I ET AL: "GPS Multipath Detection Based on Sequence of Successive-Time Double-Differences", IEEE SIGNAL PROCESSING LETTERS, IEEE SERVICE CENTER, PISCATAWAY, NJ, US, Bd. 11, Nr. 3, 1. März 2004 (2004-03-01), Seiten 316-319, XP011107859, ISSN: 1070-9908, DOI: 10.1109/LSP.2003.821744**

EP 3 155 451 B1

**Beschreibung**

Die Erfindung betrifft ein Verfahren zur Bewertung eines Satellitensignals in einem globalen Navigationssatellitensystem im Hinblick auf einen Mehrwegefehler, wobei ein insbesondere bewegter Empfänger im Rahmen einer Positionsbestimmung aus den Satellitensignalen mehrerer Satelliten einen auf einer Laufzeitmessung basierenden Laufzeitabstand, zwischen dem Empfänger und dem Satelliten und einen auf einer Trägerphasenmessung basierenden Trägerphasenabstand zwischen dem Empfänger und dem Satelliten oder einem Referenzpunkt bestimmt, einen Empfänger für ein globales Navigationssatellitensystem und ein Kraftfahrzeug.

Globale Navigationssatellitensysteme (GNSS) sind im Stand der Technik bereits weitgehend bekannt. Sie haben gemein, dass eine Vielzahl von Satelliten in der Erdumlaufbahn Signale aussenden, die üblicherweise auf einer Trägerfrequenz aufmoduliert sind und die Position des Satelliten und eine Sendezeit des sogenannten Codesignals beschreiben. Über das Codesignal mit der Position des Satelliten und der Uhrzeit der Aussendung lässt sich, wenn die Uhren in einem Empfänger mit denen der Satelliten perfekt synchronisiert sind, grundsätzlich bereits aus den Satellitensignale dreier Satelliten eine dreidimensionale Position auf der Erde bestimmen, nachdem sich aus den Laufzeiten des Satellitensignals eine Entfernung ergibt (Laufzeitmessung) und die Schnittpunkte der Kugeloberflächen, die sich aus dem Abstand zwischen dem Empfänger und dem Satelliten ergeben, aufgefunden werden. Da üblicherweise ein Uhrenfehler gegeben ist, sind die Satellitensignale von vier Satelliten erforderlich, um über eine Laufzeitmessung eine dreidimensionale Position auf der Erde bestimmen zu können, da dann vier Gleichungen für vier Unbekannte vorliegen. Häufig werden Signale weiterer Satelliten zur Plausibilisierung und dergleichen genutzt. Es wurden auch Verfahren vorgeschlagen, die mit weniger als vier Satellitensignalen arbeiten, welche dann aber mit Bewegungsmodellen und/oder zeitlichen Korrelationen arbeiten.

Bei der hier beschriebenen Vorgehensweise wird die Position über die Laufzeit des Satellitensignals von dem Satelliten zu dem Empfänger bestimmt, aus der sich der Abstand zwischen dem Satelliten und dem Empfänger ergibt. Dieser sich ergebende Abstand wird gemeinsam mit dem Empfänger-uhrenfehler häufig als "pseudorange" bezeichnet; die Laufzeitmessung wird oft, da sie den auf die Trägerfrequenz des Satellitensignals aufmodulierten Code auswertet, als "Codemessung" oder "Codephasenmessung" bezeichnet.

Bei freier Sicht auf den Himmel erreichen heutzutage einfache GNSS-Empfänger bereits eine Genauigkeit von unter 5 m in 95 % der Fälle. Aufgrund der hohen Lichtgeschwindigkeit kommt es in den meisten Fällen noch zu Ungenauigkeiten bei der Laufzeitmessung. Viele moderne GPS-Empfänger nutzen daher noch eine weitere Variante für Messungen von Abständen, nämlich die sogenannte eine Dopplermessung verwendende Trägerphasenmessung, in der die Phase der Trägerfrequenz und ihre Veränderung analysiert wird. Während Phasenmessungen bei der Ermittlung von Abständen für andere Anwendungen, beispielsweise Time-of-Flight-Kameras, äußerst gängig sind, besteht bei GNSS-Empfängern das Problem, dass unbekannt ist, wie viele volle Wellenzüge zwischen dem Satelliten und dem GNSS-Empfänger liegen. Es existiert also bei einer Phasenmessung immer eine Mehrdeutigkeit, da nicht bekannt ist, wie viele volle Wellenlängen bereits zurückgelegt wurden. Mithin bezieht sich die Dopplermessung (Trägerphasenmessung) meist auf einen Referenzpunkt, ab dem die Phase möglichst durchgängig beobachtet wird und mithin zumindest zu dieser Referenz die Zahl der Wellenlängen bekannt ist. Es wurden auch Verfahren vorgeschlagen, in denen die Zahl der ganzen Wellenlängen bis zum Satelliten abgeschätzt wird, um auch durch die Trägerphasenmessung einen Abstand zwischen dem Empfänger und dem Satelliten zu ermitteln. Ein Problem kann beim zeitweise Verlust eines Satellitensignals auftreten, da dann gegebenenfalls ein Durchlauf wenigstens einer Wellenlänge verpasst wird, so dass ein Verlust der Phasenbeziehung auftritt. Ursache hierfür können beispielsweise Signalverdeckungen durch Hindernisse, aber auch Mehrwegeeffekte und dergleichen sein. Ein solcher Verlust der Phasenbeziehung wird als "loss of lock" bezeichnet und hat meist einen Sprung in Messungen der Trägerphase zur Folge ("cycle slip"). Die Laufzeitmessung ist hierdurch jedoch nicht beeinflusst.

In vielen modernen Anwendungen, insbesondere in Kraftfahrzeugen, wird heutzutage eine sehr hohe Genauigkeit der Lokalisierung des Empfängers gefordert, beispielsweise bei modernen Fahrassistenzsystemen in Kraftfahrzeugen. Im Rahmen einer GNSS-Messung treten eine Mehrzahl von Fehlern auf, von denen einer der Mehrwegefehler ("multipath error") aufgrund von Mehrwegeeffekten ist. So treten im bebauten Gelände und vor allem in engen Gassen oder bei hohen Häuserfassaden häufig Abschattungen und Reflektionen auf, die zu großen Positionsfehlern führen können. Besteht noch eine Sichtlinienverbindung zu dem entsprechenden Satelliten, liegen das direkt über die Sichtlinie (LOS) erhaltene Satellitensignal und diesem überlagert, reflektierte, leicht verschobene Mehrwegsignale vor, was zu Effekten ähnlich einer Schwebung und dergleichen führt. Es wurden bereits mehrere Verfahren vorgeschlagen, um Mehrwegeeffekte durch Hardware und/oder Software zu unterdrücken.

Eine erste Herangehensweise betrifft die Anpassung von Parametern des eingangsseitig am Empfänger vorgesehenen Korrelators, wobei hohe Bandbreiten des Präkorrelators sowie schmale Korrelator-Abstände die Robustheit gegenüber mehrwegebehafteten Satellitensignalen erhöhen, vgl. hierzu beispielsweise das Standardwerk von E. D. Kaplan und C. J. Hegarty, "Understanding GPS - Principles and Applications", Norwood: Artech House 2005. Ein weiterer vorgeschlagener Ansatz sind Derivate von RAIM (Receiver Autonomous Integrity Monitoring), um fehlerhafte Satellitensignale/Abstandsmessungen zu erkennen. Dabei wird zwischen Sequential- und Snapshot-RAIM unterschieden. Bei Snapshot-RAIM werden die gleichzeitigen Beobachtungen verschiedener Satelliten gegeneinander plausibilisiert. Eine Beobachtung, deren Residuum eine geeignete Schwelle überschreitet, wird verworfen. Bei Sequential-RAIM werden zur Residuenbildung Prädiktionen aus vergangenen Messungen verwendet, vgl. hierzu beispielsweise den Artikel von S. Hewitson and J. Wang, "Extended Receiver Autonomous Integrity Monitoring for GNSS/INS Integration", Journal of Surveying Engineering, Vol. 136, Nr. 1, Seiten 13 - 22, 2010.

Neben Detektionsverfahren, die auf der Pseudorange, also auf der Laufzeitmessung, basieren, existieren auch Ansätze, die zusätzliche Ausgangsgrößen eines Empfängers nutzen, beispielsweise das Ergebnis der Dopplermessung. Dabei wird die Tatsache ausgenutzt, dass sich der Mehrwegefehler unterschiedlich auf die Trägerphasenmessung und die Laufzeitmessung auswirkt. Durch Subtraktion des durch die Dopplermessung (Trägerphasenmessung) ermittelten Abstands (Dopplerabstands) von dem durch die Laufzeitmessung aufgrund des aufmodulierten Codes ermittelten Abstand (Laufzeitabstand) kann die sogenannte Code-Minus-Carrier (CMC)-Größe gebildet werden und der Betrag des Mehrwegefehlers geschätzt werden, wie dies beispielsweise in dem Artikel von M. S. Braasch, "Multipath effects", in: Global Positioning System Theory and Applications, Vol. 1, Seiten 547 - 568, 1996, beschrieben ist. Die CMC-Größe oder ähnliche Größen können zudem im Frequenzbereich analysiert und eine für die Geometrie charakteristische Mehrwege-Frequenz kann gedämpft werden.

Allgemein ist festzustellen, dass es sich bei dem Mehrwegefehler um ein lokal eingeschränktes Phänomen handelt. Daher kann keine Korrektur anhand einer Referenzinfrastruktur (beispielsweise differentielles GPS) erfolgen. Es muss mithin ein Empfänger-autonomes Detektionsverfahren eingesetzt werden. Die bislang im Stand der Technik bekannten Verfahren bringen jedoch einige Nachteile mit sich.

So benötigen die weit verbreiteten Snapshot-RAIM-Verfahren zur Fehlerdetektion und Identifikation eine Mindestanzahl an sichtbaren Satelliten. Eine Detektion eines Mehrwegefehlers ist dort erst mit fünf Satellitensignalen möglich, wobei die Identifikation einer fehlerhaften Beobachtung erst bei Vorliegen bei sechs Satellitensignalen erfolgen kann. Abwandlungen des traditionellen RAIM sind in der Lage, aus n Beobachtungen, die n-5 fehlerhaften zu identifizieren, vgl. hierzu auch G. Schrott, M. Rippl, A. Ene, J. Blanch, B. Belabbas, T. Walter, P. Enge und M. Meurer, "Enhancements of the Range Consensus algorithm (RANCO)", in: Proceedings of the ION GNSS Conference, 2008.

Für viele tatsächlich auftretende Anwendungsfälle ist jedoch die hohe Anzahl nötiger Satellitensignale eine starke Restriktion. Gerade in urbanen Gebieten, wo Mehrwegeausbreitung eine große Herausforderung darstellt, können hohe Häuserfassaden einen Großteil der Sicht zum Himmel versperren. In solchen Häuserschluchten ist deshalb oft nicht die für eine Detektion eines mit einem Mehrwegefehler belasteten Satellitensignals nötige Anzahl von Satelliten empfangbar.

Für Verfahren, die auf Sequential-RAIM basieren, ist ein Zustandsschätzer erforderlich, um die Prädiktionen aus vergangenen Messungen zu ermitteln. Dieser führt eine zusätzliche Komplexität ein, zudem sind Modell- und Prädiktionsfehler unvermeidlich.

Für statische Anwendungen hat sich insbesondere die Nutzung der CMC-Größe als äußerst vorteilhaft erwiesen, vgl. hierzu wiederum den bereits genannten Artikel von M. S. Braasch. Problematisch wird die Anwendung des Verfahrens jedoch im Fall eines dynamischen, also bewegten Empfängers, wie er beispielsweise in Kraftfahrzeugen verwendet wird. Dann treten deutlich häufiger die bereits beschriebenen Cycle Slips auf, durch welche die Trägerphasenmehrdeutigkeitsschätzung erschwert wird. Zum Erzeugen der CMC-Größe ist jedoch eine aufgelöste Trägerphasenmehrdeutigkeit erforderlich. Auch Verfahren, die im Frequenzbereich arbeiten, scheitern im dynamischen Fall, denn eine sich ständig ändernde Geometrie verhindert die Ausbildung einer charakteristischen Frequenz in den Beobachtungen.

Ein Artikel von Hyung Keun Lee et al., "GPS Multipath Detection Based on Sequence of Successive-Time Double-Differences", IEEE Signal Processing Letters, Band 11, Nr. 3, Seiten 316-319 (XP011107859, ISSN: 1070-9908, DOI: 10.1109/LSP.2003.821744) betrifft die Detektion von Mehrwegefehlern in Form effizienter kanalweiser Teststatistiken, die auf einer Sequenz von zu aufeinanderfolgenden Zeitpunkten aufgenommenen Doppeldifferenzen (STDD) beruhen sollen. Hierbei soll die STDD die Differenz zwischen einer inkrementellen Pseudorange und einer inkrementellen Trägerphase sein

Gemäß US 6,329,945 B1 soll eine verbesserte GPS-Genauigkeit mittels einer Himmelskarte erreicht werden. Dabei soll über einen langen Zeitraum, insbesondere 24 Stunden, gemessen werden, wobei sich die Umgebungsbedingungen nicht ändern sollen. Dort wird ausgeführt, dass der Mehrwegefehler keinen starken Einfluss auf die Phase des Trägers hat, so dass vorgeschlagen wird, die akkumulierte Phasenänderung von Messung zu Messung zu beobachten.

Der Erfindung liegt daher die Aufgabe zugrunde, eine insbesondere bei bewegtem GNSS-Empfänger verbesserte Möglichkeit zur Detektion von mit Mehrwegefehler belasteten Satellitensignalen anzugeben.

Zur Lösung dieser Aufgabe sind bei einem Verfahren der eingangs genannten Art erfindungsgemäß die Merkmale des Anspruchs 1 vorgesehen.

Erfindungsgemäß wird also eine Größe betrachtet, die als "Code-Minus-Carrier-Deltarange" (CMCD) bezeichnet werden kann. Als Deltarange (oder auch "Range Rate") wird im Rahmen von GNSS eine Größe bezeichnet, die sowohl aus der Laufzeitmessung als auch aus der Trägerphasenmessung abgeleitet werden kann, nämlich durch zeitliche Ableitung der jeweiligen Abstände. Die Erfindung nutzt, wie auch bei anderen die CMC-Größe nutzenden Verfahren, aus, dass sich ein Mehrwegefehler unterschiedlich stark auf die Messgrößen der Laufzeitmessung, der Trägerphasenmessung und der der Trägerphasenmessung zugrundeliegenden Dopplermessung auswirkt. Mithin kann ein existierender Fehler durch gegenseitige Plausibilisierung detektiert werden, wobei sich beispielsweise der durch Mehrwegeempfang verursachte Mehrwegefehler in der Laufzeitmessung und der Trägerphasenmessung um zwei Größenordnungen unterscheidet, vgl. beispielsweise S. 178 des Grundlagenwerks von P. Misra und P. Enge, "Global Positioning System: Signals, Measurements, and Performance", Ganga-Jamuna Press, 2011.

Dabei geht die vorliegende Erfindung zur Bildung der auf der Delta-Range basierenden Bewertungsgröße und zu deren Motivation von bestimmten Fehlermodellen aus. Als Fehlermodell für die Laufzeitmessung (Pseudorange) wird angesetzt, dass sich der Laufzeitabstand zu

$$\rho^{(k)}(t) = r^{(k)}(t, t-\tau) + c[\delta t_u(t) - \delta t^{(k)}(t-\tau)] + I^{(k)}(t) + T^{(k)}(t) + \alpha m_\rho^{(k)}(t) + \varepsilon_\rho^{(k)}(t)$$

<div align="right">Gleichung (1)</div>

ergibt, wobei für die Trägerphasenmessung entsprechend für den Trägerphasenabstand

$$\lambda\phi^{(k)}(t) = r^{(k)}(t, t-\tau) + c[\delta t_u(t) - \delta t^{(k)}(t-\tau)] - I^{(k)}(t) + T^{(k)}(t) + \lambda N + \alpha m_\phi^{(k)}(t) + \varepsilon_\phi^{(k)}(t)$$

<div align="right">Gleichung (2)</div>

angenommen wird, wobei jeweils

| | |
|---|---|
| $t$ | Empfangszeitpunkt |
| $k = 1, ..., K$ | Satellitennummer |
| $r^{(k)}(t, t-\tau)$ | Geometrische (wahre) Distanz zwischen der Empfängerposition zum Zeitpunkt t und der Satellitenposition zum Sendezeitpunkt $t-\tau$ |
| $\tau$ | Übertragungszeit [s] |
| $c$ | Lichtgeschwindigkeit [m/s] |
| $\delta t_u(t)$ | Empfänger-Uhrenfehler (relativ zur GNSS-Zeit) |
| $\delta t^{(k)}(t-\tau)$ | Satelliten-Uhrenfehler (relativ zur GNSS.Zeit) |
| $I^{(k)}(t), T^{(k)}(t)$ | Ionosphären- und Troposphärenfehler |
| $\alpha$ | Binäre Indikatorvariable (1: Mehrwegeeffekte vorhanden, 0: Mehrwegeeffekte nicht vorhanden) |
| $m_\rho(t)$ | Laufzeitmessungs-Mehrwegefehler |
| $\varepsilon_\rho(t)$ | Unmodellierte Fehler (z.B. Empfängerrauschen, diffuse Reflexionen) |
| $N$ | Trägerphasenmehrdeutigkeit |
| $\lambda$ | Wellenlänge des Trägersignals |
| $m_\phi(t)$ | Trägerphasenmessungs-Mehrwegefehler |
| $\varepsilon_\phi(t)$ | Unmodellierte Fehler. |

Gemäß der vorliegenden Erfindung wird dann die Code-Minus-Carrier-Deltarange (CMCD), die als Bewertungsgröße verwendet wird, ermittelt als

$$\begin{aligned} CMCD = \quad \dot{\rho}^{(k)} - \lambda\dot{\phi}^{(l)} \quad &\approx \left(\dot{r}^{(k)} + c\dot{\delta t}_u(t) + \alpha\dot{m}_\rho^{(k)} + \dot{\varepsilon}_\rho^{(k)}\right) - \left(\dot{r}^{(l)} + c\dot{\delta t}_u(t) + \alpha\dot{m}_\phi^{(l)} + \dot{\varepsilon}_\phi^{(l)}\right) \\ &\approx \left(\dot{r}^{(k)} - \dot{r}^{(l)}\right) + \alpha(\dot{m}_\rho^{(k)} - \dot{m}_\phi^{(l)}) + \left(\dot{\varepsilon}_\rho^{(k)} - \dot{\varepsilon}_\phi^{(l)}\right) \\ &\approx \left(\dot{r}^{(k)} - \dot{r}^{(l)}\right) + \alpha\dot{m}_\rho^{(k)} + \dot{\varepsilon}_\rho^{(k)} \end{aligned}$$

<div align="right">Gleichung (3)</div>

Dabei wird ersichtlich angenommen, dass die Zeitabhängigkeit der durch Dispersionseffekte doppelt auftretenden Atmosphärenfehler eine nur langsame Veränderung beschreibt, so dass mithin die entsprechende Ableitung

<div align="center">4</div>

vernachlässigbar klein ist. Vorteilhaft ist zu erkennen, dass die Phasenambiguität, also die Trägerphasenmehrdeutigkeit, aufgrund der Tatsache, dass sie nicht zeitabhängig ist, ebenso wegfällt, so dass Cycle Slips kein Problem mehr darstellen. Die Annahme

$$\dot{m}_\phi^{(l)} \approx 0$$

ist nur bei Empfang des Satellitensignals auch direkt über die Sichtlinie (LOS) grundsätzlich gültig, so dass in einem Fall, in dem sich das Satellitensignal nur aus Mehrwegesignalen zusammensetzt, sogenannter NLOS-Fall, das Modell ungenau ist, jedoch ist die Verwendung der Bewertungsgröße möglich, nachdem das Satellitensignal dann durchaus mit dem Mehrwegefehler belastet ist und deutlich vom Normalverlauf abweicht, so dass das Mehrwegekriterium ansprechen sollte.

Dabei sind ersichtlich zwei unterschiedliche Herangehensweisen denkbar, wobei es zum einen in nicht erfindungsgemäßer Weise denkbar ist, dass die Bewertungsgröße aus aus demselben Satellitensignal abgeleiteten Abständen ermittelt wird. In der obigen Formel (3) bedeutet das, dass k=l gilt, denn so kann die Detektion für jedes Satellitensignal unabhängig erfolgen und es ist unnötig, die Beobachtungen unter den einzelnen Satellitensignalen zu vergleichen, weshalb auch keine Mindestanzahl an Beobachtungen vorgegeben sein muss. Erfindungsgemäß ist jedoch vorgesehen, dass die Bewertungsgröße aus einem aus dem Satellitensignal eines ersten Satelliten abgeleiteten Laufzeitabstand und einem aus den Satellitensignal eines anderen, zweiten Satelliten abgeleiteten Trägerphasenabstand ermittelt wird, wobei einer der Satelliten ein Referenzsatellit mit einem geringen Mehrwegefehler ist. Ist also von vornherein ein Satellit bekannt, der einen geringen Mehrwegefehler aufweist, kann dieser als Referenzsatellit herangezogen werden. Insbesondere verbleibt dann ein Geometrieterm, erster Term der letzten Zeile der Gleichung (3), so dass es zweckmäßig ist, wenn die Bewertungsgröße um einen durch unterschiedliche Relativgeschwindigkeiten zwischen Empfänger und Satellit entstehenden Zusatzterm (Geometrieterm) unter Berücksichtigung von Geschwindigkeitsinformationen wenigstens der Satelliten, insbesondere der Satelliten und des Empfängers, korrigiert wird. Das bedeutet, aus vorliegenden Informationen lässt sich der Zusatzterm (Geometrieterm) durchaus abschätzen, so dass die Bewertungsgröße nach entsprechender Korrektur verwendet werden kann.

Ohne Mehrwegeempfang entspricht die Bewertungsgröße bei vom selben Satelliten stammenden Abständen einem verstärkten Empfängerrauschen. Bei Mehrwegeempfang tritt ein zusätzlicher Rauschprozess auf, der eine Änderung der statistischen Eigenschaften der Bewertungsgröße bewirkt, nämlich insbesondere ein breiteres Frequenzband mit deutlich größeren Ausschlägen (Amplituden) im zeitlichen Verlauf zeigt. Mithin können Mehrwegekriterien als Hypothesentest formuliert werden, die den zusätzlichen Rauschprozess detektieren und es mithin erlauben, die Laufzeitmessung bzw. das Satellitensignal an sich als mehrwegefehlerbehaftet oder mehrwegefehlerfrei zu klassifizieren. Mit anderen Worten kann es das Mehrwegekriterium erlauben, die Größe α in Gleichung (1) bis (3) als Null oder Eins abzuschätzen. Somit ist aber ein Satellitensignal auf einfache und verlässliche Art und Weise als mehrwegefehlerbelastet klassifizierbar.

Ein Vorteil des erfindungsgemäßen Vorgehens ist es, dass die Bewertungsgröße CMCD rein aus den in handelsüblichen GNSS-Empfängern vorliegenden Messdaten gebildet werden kann. Damit ist diese Art der Mehrwegedetektion unabhängig von Referenzdaten und jeglicher Infrastruktur. Die Vorteile bei Betrachtung eines einzigen Satellitensignals wurden bereits dargelegt.

Ein weiterer Vorteil der hier beschriebenen Detektion von Mehrwegefehlern in Satellitensignalen liegt darin, dass die Bewertungsgröße auch im dynamischen Fall, also bei einem beispielsweise in einem Kraftfahrzeug bewegten Empfänger, eingesetzt werden kann, da der Mehrwegeprozess als ein breitbandiges Rauschen in der Bewertungsgröße abgebildet wird und damit insbesondere Cycle Slips als vernachlässigbarer Störprozess angesehen werden können.

Aus dem differentiellen Charakter der CMCD, also der Bewertungsgröße, folgt eine Immunität gegenüber langsamen Fehlerprozessen. Hierzu zählen die Ionosphärenfehler, Troposphärenfehler und Trägerphasenmehrdeutigkeit, wie bereits dargelegt wurde. Dies erhöht die Robustheit des Detektionsalgorithmus und senkt die Komplexität der technischen Umsetzung. Zur konkreten Implementierung der Ermittlung der Bewertungsgröße sind bereits zwei Register und drei Addierer ausreichend.

Wie bereits erwähnt wurde, ist im Rahmen der vorliegenden Erfindung insbesondere vorgesehen, dass durch das Mehrwegekriterium das überprüfte Satellitensignal als mehrwegefehlerfrei oder mehrwegefehlerbehaftet klassifiziert wird. Dabei kann konkret vorgesehen sein, dass für das Mehrwegekriterium durch eine statistische Auswertung der zuletzt ermittelten Bewertungsgrößen in einem gleitenden Fenster ein Kennwert ermittelt wird, der mit einem Schwellwert zur Unterscheidung zwischen einem mehrwegefehlerfreien und einem mehrwegefehlerbehafteten Satellitensignal verglichen wird. Wie bereits erwähnt wird, führt das Vorliegen von Mehrwegefehlern dazu, dass die Bewertungsgröße nicht nur das verstärkte grundsätzliche Rauschen enthält, sondern ein zusätzliches breitbandiges Rauschen auftritt, das zudem deutlich stärkere Ausschläge aufweist, so dass sich statistische Auswertungen in einem gleitenden Fenster anbieten, um Mehrwegefehler schnell und verlässlich zu detektieren. Dabei kann konkret vorgesehen sein, dass als Kennwert ein maximaler Betrag der Bewertungsgröße im gleitenden Fenster betrachtet wird und/oder als Kennwert die Standardabweichung der Bewertungsgrößen im gleitenden Fenster betrachtet wird, wobei insbesondere der Schwellwert als wenigstens ein Vielfaches einer Varianz in einem gesicherten mehrwegefehlerfreien Verlauf angesetzt wird. Der konkrete Multiplikator kann dabei abhängig von den erwarteten statistischen Fehlern erster und zweiter Art gewählt werden. Beide Varianten machen sich zunutze, dass das breitbandige Zusatzrauschen durch den Mehrwegefehler größere Ausschläge aufweist, als sie durch das ebenso gaußverteilte verstärkte Empfängerrauschen auftreten können. Selbstverständlich sind grundsätzlich auch andere Arten der Formulierung des Mehrwegekriteriums denkbar, um die Änderungen im statistischen Verhalten, die durch das zusätzliche Rauschen auftreten, zu beschreiben.

Wie bereits erwähnt, lässt sich das erfindungsgemäße Verfahren besonders vorteilhaft auch bei einem bewegten Empfänger anwenden, insbesondere bei Verwendung eines in einem Kraftfahrzeug verbauten und/oder angeordneten Empfängers. Das erfindungsgemäße Verfahren ist ferner für globale Navigationssatellitensysteme (GNSS) einsetzbar, mit denen eine Laufzeitmessung und eine Trägerphasenmessung möglich ist, so dass beispielsweise als globales Navigationssatellitensystem GPS und/oder Galileo und/oder GLONASS und/oder Beidou (Compass) verwendet werden können.

Neben dem Verfahren betrifft die Erfindung auch einen Empfänger für ein globales Navigationssatellitensystem, der eine zur Durchführung des erfindungsgemäßen Verfahrens ausgebildete Recheneinrichtung aufweist. Dabei kann das erfindungsgemäße Verfahren insgesamt besonders zweckmäßig in die üblichen Algorithmen zur Bestimmung der aktuellen Position des Empfängers integriert werden, in denen bestimmte Satellitensignale, die als mehrwegefehlerbehaftet detektiert wurden, der weiteren Betrachtung entzogen werden, oder dergleichen. Sämtliche Ausführungen bezüglich des erfindungsgemäßen Verfahrens lassen sich analog auf den erfindungsgemäßen Empfänger übertragen, mit welchem mithin dieselben Vorteile erhalten werden können.

Schließlich betrifft die Erfindung auch ein Kraftfahrzeug, das einen erfindungsgemäßen Empfänger aufweist. Kraftfahrzeuge werden häufig auch bei größeren Geschwindigkeiten bewegt, so dass gerade hier bislang verwendete Verfahren zur Detektion von Mehrwegefehlern nicht hinreichend robust und verlässlich eingesetzt werden konnten. Dies ändert sich bei Einsatz des erfindungsgemäßen Verfahrens, das aufgrund der bereits dargelegten Sachverhalte gerade diese Robustheit und Verlässlichkeit bei der Detektion von Mehrwegefehlern bietet.

Weitere Vorteile und Einzelheiten der vorliegenden Erfindung ergeben sich aus den im Folgenden beschriebenen Ausführungsbeispielen sowie anhand der Zeichnungen. Dabei zeigen:

Fig. 1    einen Ablaufplan eines Ausführungsbeispiels des erfindungsgemäßen Verfahrens,

Fig. 2    ein Blockschaltbild zur Ermittlung der Bewertungsgröße,

Fig. 3    ein möglicher zeitlicher Verlauf der Bewertungsgröße, und

Fig. 4    ein erfindungsgemäßes Kraftfahrzeug.

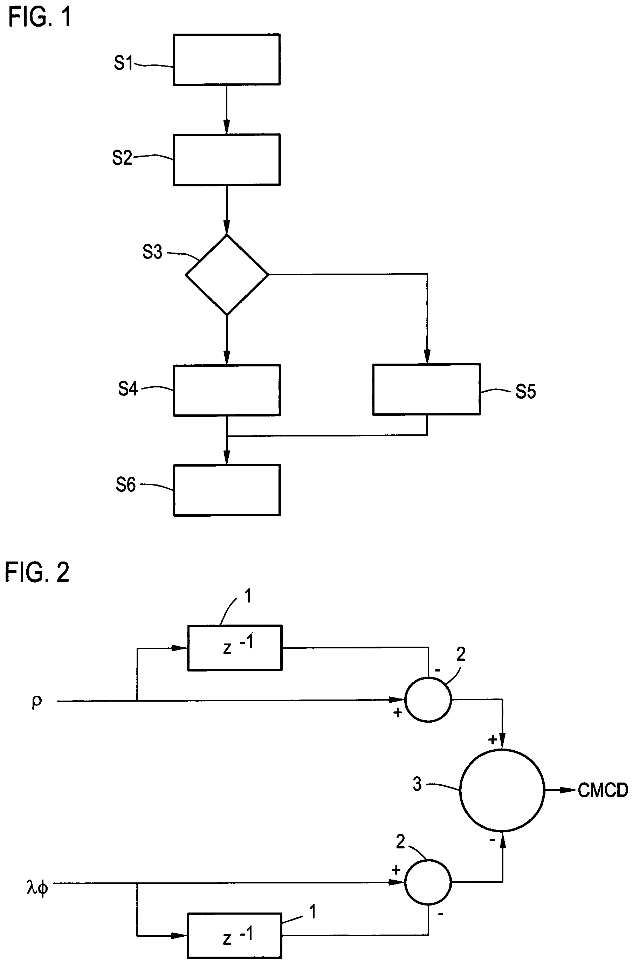

Fig. 1 zeigt einen Ablaufplan des erfindungsgemäßen Verfahrens, welches in die allgemeine Positionsbestimmung innerhalb eines GNSS-Empfängers integriert ist. In einem Schritt S1 werden innerhalb des GNSS-Empfängers, wie üblich, der aus einer Laufzeitmessung durch Auswertung des auf die Trägerfrequenz des Satellitensignals aufmodulierten Codes bestimmte Laufzeitabstand zwischen dem Empfänger und dem Satelliten und der auf einer Trägerphasenmessung mit zugrundeliegender Dopplermessung basierende Trägerphasenabstand zwischen dem Empfänger und dem Satelliten oder einem Referenzpunkt ermittelt und bereitgestellt.

In einem Schritt S2 werden diese Abstände (und ihr zeitlicher Verlauf) genutzt, um die Bewertungsgröße CMCD, wie sie durch die Gleichung (3) beschrieben wird, zu ermitteln. Dabei wird vorliegend die zeitliche Ableitung durch Differenzbildung zwischen dem jeweiligen aktuellen Abstand und dem in einem Register vorgehaltenen zuvor bestimmten Abstand ermittelt, wie dies auch dem Blockschaltbild der Fig. 2 zu entnehmen ist. Dort ist wiederum mit $\rho$ der Laufzeitabstand bezeichnet, mit $\lambda\phi$ der Trägerphasenabstand. Register 1 halten die zeitlich zuvor bestimmten Werte fest. Addierer 2 werden zur Differenzbildung verwendet, um die jeweiligen Deltaranges zu bestimmen. Ein weiterer Addierer 3 subtrahiert die beiden Deltaranges gemäß der Definition in Gleichung (3) voneinander, um die Bewertungsgröße CMCD zu erhalten. Selbstverständlich stellt das Blockschaltbild in Fig. 2 nur eine einfache Realisierungsmöglichkeit dar; zeitliche Ableitungen können auch durch Berücksichtigung mehrerer historischer Werte und dergleichen oder auf andere Art und Weise bestimmt werden; insbesondere kann die Ermittlung der CMCD auch durch Softwarekomponenten erfolgen.

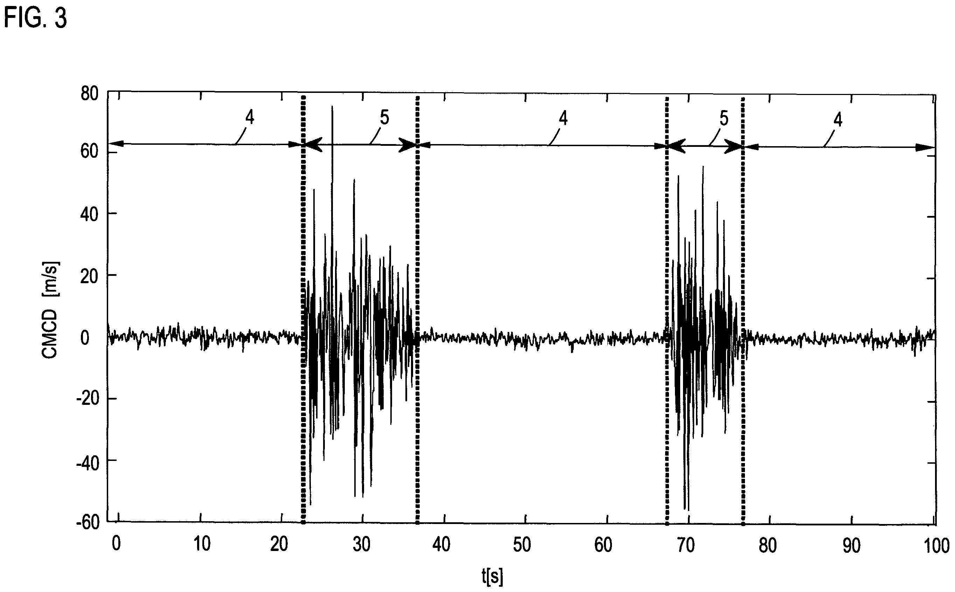

Fig. 3 zeigt einen beispielhaften Verlauf der Bewertungsgröße CMDC aufgetragen gegen die Zeit t in einem Zeitraum von etwa 100 Sekunden. Ist das zugrundeliegende Satellitensignal, wobei hier vorliegend der Laufzeitabstand und der Trägerphasenabstand des selben Satellitensignals ausgewertet werden, mehrwegefehlerfrei, so zeigt sich in den Bereichen 4 lediglich das verstärkte Empfängerrauschen mit kleinen Ausschlägen, das bedeutet, kleinen maximalen Beträgen der Bewertungsgröße. In den Bereichen 5 jedoch liegen Mehrwegeeffekte vor, so dass sich ein deutlich verändertes Verhalten ergibt, wonach ein breitbandiges Rauschen mit starken Ausschlägen, das heißt hohen Amplituden, gegeben ist.

In einem Schritt S3, vgl. wiederum Fig. 1, sollen nun Bewertungsgrößen zur Klassifizierung verwendet werden, ob das Satellitensignal mit einem Mehrwegefehler belastet ist. Hierfür wird eine statistische Auswertung des Verlaufs der Bewertungsgröße vorgenommen, wobei vorliegend ein Mehrwegekriterium verwendet wird, das den maximalen Betrag der Bewertungsgröße innerhalb eines gleitenden Fensters über den Verlauf, dass immer am aktuellen Wert der Bewertungsgröße endet, mit einem Schwellwert verglichen wird, vorliegend rein beispielhaft 5 m pro Sekunde. Ist dieser Schwellwert überschritten, wird in einem Schritt S4 das Satellitensignal als mehrwegefehlerbehaftet klassifiziert und markiert. Ist der Schwellwert jedoch nicht überschritten, wird in einem Schritt S5 das Satellitensignal, aus dem die Bewertungsgröße ermittelt wurde, als mehrwegefehlerfrei klassifiziert und markiert. Selbstverständlich wird diese Klassifizierung über den im Schritt S3 durchgeführten Hypothesentest ständig nachgeführt und die Klassifizierung wird für alle empfangenen Satellitensignale durchgeführt.

In einem Schritt S6 kann dann die Positionsbestimmung erfolgen, wobei als mehrwegefehlerbehaftet markierte Satellitensignale und die aus diesen ermittelten Abstände nicht berücksichtigt werden.

Selbstverständlich können im Schritt S3 zusätzlich oder alternativ auch andere Bewertungskriterien eingesetzt werden, beispielsweise solche, die die Standardabweichung der Bewertungsgröße im gleitenden Fenster beurteilen.

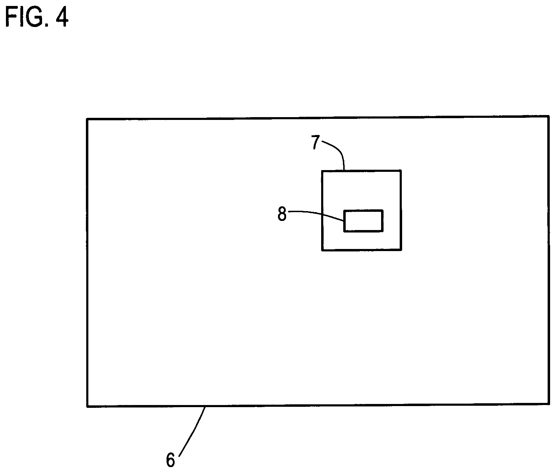

Fig. 4 zeigt schließlich eine Prinzipskizze eines erfindungsgemäßen Kraftfahrzeugs 6, das einen erfindungsgemäßen GNSS-Empfänger 7, hier einen GPS-Empfänger, aufweist. Dieser enthält eine zur Durchführung des erfindungsgemäßen Verfahrens ausgebildete Recheneinrichtung 8.

## Patentansprüche

1. Verfahren zur Bewertung eines Satellitensignals in einem globalen Navigationssatellitensystem im Hinblick auf einen Mehrwegefehler, wobei ein Empfänger (7) im Rahmen einer Positionsbestimmung aus den Satellitensignalen mehrerer Satelliten einen auf einer Laufzeitmessung basierenden Laufzeitabstand zwischen dem Empfänger (7) und dem Satelliten und einen auf einer Trägerphasenmessung basierenden Trägerphasenabstand zwischen dem Empfänger (7) und dem Satelliten oder einem Referenzpunkt bestimmt,

   wobei in dem Empfänger (7) als eine Bewertungsgröße eine Differenz der zeitlichen Ableitung des Laufzeitabstands und des Trägerphasenabstands gebildet wird, welche durch wenigstens ein Mehrwegekriterium auf das Vorliegen eines Mehrwegefehlers hin ausgewertet wird, **dadurch gekennzeichnet,**

   **dass** die Bewertungsgröße aus einem aus dem Satellitensignal eines ersten Satelliten abgeleiteten Laufzeitabstand und einem aus dem Satellitensignal eines anderen, zweiten Satelliten abgeleiteten Trägerphasensignal ermittelt wird, wobei einer der Satelliten ein Referenzsatellit mit einem geringen Mehrwegefehler ist.

2. Verfahren nach Anspruch 1,
   **dadurch gekennzeichnet,**
   **dass** die Bewertungsgröße um einen durch unterschiedliche Relativgeschwindigkeiten zwischen Empfänger (7) und Satellit entstehenden Zusatzterm unter Berücksichtigung von Geschwindigkeitsinformationen wenigstens der Satelliten, insbesondere der Satelliten und des Empfängers (7), korrigiert wird.

3. Verfahren nach einem der vorangehenden Ansprüche,
   **dadurch gekennzeichnet,**
   **dass** durch das Mehrwegekriterium das überprüfte Satellitensignal als mehrwegefehlerfrei oder mehrwegefehlerbehaftet klassifiziert wird.

4. Verfahren nach Anspruch 3,
   **dadurch gekennzeichnet,**
   **dass** für das Mehrwegekriterium durch eine statistische Auswertung der zuletzt ermittelten Bewertungsgrößen in einem gleitenden Fenster ein Kennwert ermittelt wird, der mit einem Schwellwert zur Unterscheidung zwischen einem mehrwegefehlerfreien und einem mehrwegefehlerbehafteten Satellitensignal verglichen wird.

5. Verfahren nach Anspruch 4,
   **dadurch gekennzeichnet,**
   **dass** als Kennwert ein maximaler Betrag der Bewertungsgröße im gleitenden Fenster betrachtet wird und/oder als Kennwert die Standardabweichung der Bewertungsgrößen im gleitenden Fenster betrachtet wird, wobei insbesondere der Schwellwert als ein Vielfaches einer Standardabweichung in einem gesichert mehrwegefehlerfreien Verlauf angesetzt wird.

**6.** Verfahren nach einem der vorangehenden Ansprüche,
**dadurch gekennzeichnet,**
**dass** der Empfänger (7) bewegt wird, insbesondere ein in einem Kraftfahrzeug (6) verbauter und/oder angeordneter Empfänger (7) verwendet wird.

**7.** Verfahren nach einem der vorangehenden Ansprüche,
**dadurch gekennzeichnet,**
**dass** als globales Navigationssatellitensystem GPS und/oder Galileo und/oder GLONASS und/oder Beidou verwendet wird.

**8.** Empfänger (7) für ein globales Navigationssatellitensystem, aufweisend eine zur Durchführung eines Verfahrens nach einem der vorangehenden Ansprüche ausgebildete Recheneinrichtung (8).

**9.** Kraftfahrzeug (6), aufweisend einen Empfänger (7) nach Anspruch 8.


**Claims**

**1.** Method for the evaluation of a satellite signal in a global navigation satellite system with regard to a multipath error, wherein, as part of a position determination, a receiver (7) determines from the satellite signals of a plurality of satellites a travel time distance between the receiver (7) and the satellite based on a travel time measurement and determines a carrier phase distance between the receiver (7) and the satellite or a reference point based on a carrier phase measurement,
wherein in the receiver (7) a difference of the time derivative of the travel time distance and the carrier phase distance is calculated as an evaluation variable, which is evaluated against at least one multipath criteria for the existence of a multipath error,
**characterized in that**
the evaluation variable is determined from a travel time distance derived from the satellite signal of a first satellite and a carrier phase signal derived from the satellite signal of a further, second satellite, wherein one of the satellites is a reference satellite with a small multipath error.

**2.** Method according to claim 1,
**characterized in that**
the evaluation variable is corrected by an additional term occurring due to different relative speeds of the receiver (7) and the satellite taking into account speed information of at least the satellites, in particular of the satellites and the receiver (7).

**3.** Method according to any of the preceding claims,
**characterized in that**
the checked satellite signal is classified using the multipath criteria as multipath error free or as having multipath errors.

**4.** Method according to claim 3,
**characterized in that**
a characteristic value is determined for the multipath criteria by means of a statistical evaluation of the last determined evaluation parameter in a sliding window, which characteristic value is compared with a threshold value for differentiating between a multipath error free satellite signal and a satellite signal having multipath errors.

**5.** Method according to claim 4,
**characterized in that**
as characteristic value a maximum value of the evaluation parameter in the sliding window is used and/or as characteristic value the standard deviation of the evaluation parameters in the sliding window is used, wherein in particular the threshold value is set as a multiple of a standard deviation in a secured multipath error free operation.

**6.** Method according to any of the preceding claims,
**characterized in that**
the receiver (7) is moved, in particular a receiver (7) built into a motor vehicle (6) and/or arranged in a motor vehicle is used.

7.  Method according to any of the preceding claims,
    **characterized in that**
    GPS and/or Galileo and/or GLONASS and/or Beidou is used as global navigation satellite system.

8.  Receiver (7) for a global navigation satellite system, comprising a computing device (8) configured to carry out a method according to any of the preceding claims.

9.  Motor vehicle (6), comprising a receiver (7) according to claim 8.


**Revendications**

1.  Procédé d'évaluation d'un signal de satellite dans un système de navigation par satellite du point de vue d'une erreur de trajets multiples, dans lequel un récepteur (7) détermine dans le cadre d'une détermination de position, à partir des signaux de satellites de plusieurs satellites, une distance mesurée par temps de propagation, basée sur une mesure de temps de propagation, entre le récepteur (7) et le satellite et une distance mesurée par phase porteuse, basée sur une mesure de phase porteuse, entre le récepteur (7) et le satellite ou un point de référence, dans lequel une différence des dérivées temporelles de la distance mesurée par temps de propagation et de la distance mesurée par phase porteuse est formée comme grandeur d'évaluation dans le récepteur (7), laquelle différence est évaluée via au moins un critère de trajets multiples quant à la présence d'une erreur de trajets multiples, **caractérisé en ce que** la grandeur d'évaluation est déterminée à partir d'une distance mesurée par temps de propagation déduite du signal de satellite d'un premier satellite et d'un signal de phase porteuse déduit du signal de satellite d'un deuxième satellite, l'un des satellites étant un satellite de référence avec une petite erreur de trajets multiples.

2.  Procédé selon la revendication 1, **caractérisé en ce que** la grandeur d'évaluation est corrigée d'un terme supplémentaire issu des vitesses relatives différentes entre récepteur (7) et satellite en tenant compte d'informations de vitesse au moins des satellites, en particulier des satellites et du récepteur (7).

3.  Procédé selon l'une des revendications précédentes, **caractérisé en ce que** le signal de satellite vérifié est classé par le critère de trajets multiples comme étant exempt d'erreur de trajets multiples ou affecté d'une erreur de trajets multiples.

4.  Procédé selon la revendication 3, **caractérisé en ce que**, pour le critère de trajets multiples, on détermine par une évaluation statistique des dernières grandeurs d'évaluation déterminées, dans une fenêtre glissante, une valeur caractéristique qui est comparée à une valeur de seuil afin de distinguer entre signal de satellite exempt d'erreur de trajets multiples et signal de satellite affecté d'une erreur de trajets multiples.

5.  Procédé selon la revendication 4, **caractérisé en ce que**, comme valeur caractéristique, on considère une valeur maximale de la grandeur d'évaluation dans la fenêtre glissante et/ou l'écart type des grandeurs d'évaluation dans la fenêtre glissante, la valeur de seuil étant définie en particulier comme un multiple d'un écart type dans une courbe certainement exempte d'erreur de trajets multiples.

6.  Procédé selon l'une des revendications précédentes, **caractérisé en ce qu'**on déplace le récepteur (7), en particulier on utilise un récepteur (7) placé et/ou intégré dans un véhicule automobile (6).

7.  Procédé selon l'une des revendications précédentes, **caractérisé en ce que**, comme système de navigation par satellite, on utilise GPS et/ou Galileo et/ou GLONASS et/ou Beidou.

8.  Récepteur (7) destiné à un système de navigation par satellite, comportant une unité de calcul (8) conçue pour la mise en oeuvre d'un procédé selon l'une des revendications précédentes.

9.  Véhicule automobile (6), comportant un récepteur (7) selon la revendication 8.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6329945 B1

**In der Beschreibung aufgeführte Nicht-Patentliteratur**

- **VON E. D. KAPLAN ; C. J. HEGARTY.** Understanding GPS - Principles and Applications. *Norwood: Artech House,* 2005
- **VON S. HEWITSON ; J. WANG.** Extended Receiver Autonomous Integrity Monitoring for GNSS/INS Integration. *Journal of Surveying Engineering,* 2010, vol. 136 (1), 13-22
- **VON M. S. BRAASCH.** Multipath effects. *Global Positioning System Theory and Applications,* 1996, vol. 1, 547-568
- **G. SCHROTT ; M. RIPPL ; A. ENE ; J. BLANCH ; B. BELABBAS ; T. WALTER ; P. ENGE ; M. MEURER.** Enhancements of the Range Consensus algorithm (RANCO). *Proceedings of the ION GNSS Conference,* 2008
- **VON HYUNG KEUN LEE et al.** GPS Multipath Detection Based on Sequence of Successive-Time Double-Differences. *IEEE Signal Processing Letters,* vol. 11 (3), ISSN 1070-9908, 316-319
- Grundlagenwerks. **VON P. MISRA ; P. ENGE.** Global Positioning System: Signals, Measurements, and Performance. Ganga-Jamuna Press, 2011, 178